# EUROPEAN PATENT APPLICATION

(11) **EP 4 015 895 A1**
(43) Date of publication of application: **22.06.2022**
(21) Application number: 20214513.2
(22) Date of filing: 16.12.2020
(51) Int. Cl.: F21S 9/02, H02J 9/06, H05B 47/19, G08B 7/06

(54) **EMERGENCY LIGHTING SYSTEM**

(71) Applicant: Zumtobel Lighting GmbH, 6850 Dornbirn (AT)
(72) Inventor: Mayr, Gregor, 6850 Dornbirn (AT)
(74) Representative: Rupp, Christian

(57) **Abstract**

An emergency lighting system (1) is provided, comprising an emergency lighting means (103); a power converter (102); and a battery (101). The emergency lighting means (103) is configured to emit a light output (201) in accordance with a supply power fed by the power converter (102) off the battery (101). The power converter (102) is configured to feed the emergency lighting means (103) in accordance with a mandatory minimum light output (201'), in commencing a feed of the emergency lighting means (103); and feed the emergency lighting means (103) in accordance with a boost light output (201") exceeding the mandatory minimum light output (201') for a limited boost period (202), in response to a reading of a sensor (104) connectable to the emergency lighting system (1). This is in support of seamless human vision at a transition to emergency illumination.

## Description

### Technical Field

The present invention relates to lighting technology, and in particular to a lighting system for use under emergency conditions.

### Background Art

Emergency lighting systems provide a minimum light output in support of a sense of direction within buildings upon a mains failure, and facilitate quick and safe evacuation of buildings without inducing panic in an emergency, such as a fire situation. Legal provisions require the minimum light output to be in the order of moonlight, e.g., 0.5 lx. While this meets industry demands, this level of light output is detrimental for building safety: it inhibits seamless human vision at a transition to emergency illumination, since the human eye needs to get used to the lower light output, the reason being its retarded scotopic or twilight vision. This effect may be fatal in circumstances in which every second counts, such as fire situations.

### Summary of the Invention

The object of the present invention is thus to provide an emergency lighting system in support of seamless human vision at a transition to emergency illumination.

The invention is defined by the appended independent claims. Preferred embodiments are set forth in the dependent claims and in the following description and drawings.

According to a first aspect of the present disclosure, an emergency lighting system is provided, comprising an emergency lighting means; a power converter; and a battery. The emergency lighting means is configured to emit a light output in accordance with a supply power fed by the power converter off the battery. The power converter is configured to feed the emergency lighting means in accordance with a mandatory minimum light output, in commencing a feed of the emergency lighting means; and feed the emergency lighting means in accordance with a boost light output exceeding the mandatory minimum light output for a limited boost period, in response to a reading of a sensor connectable to the emergency lighting system.

The emergency lighting system may further comprise the sensor.

The sensor may comprise a smoke sensor or a gas sensor.

The sensor may comprise a presence sensor.

The sensor may comprise an acoustic/sound sensor.

The emergency lighting system may further comprise communication means configured to communicatively connect the sensor and the power converter.

The communication means may comprise a Digital Addressable Lighting Interface DALI, a powerline interface, a wireless interface or another means of communication.

The mandatory minimum light output may comprise 0.5 lx; and the boost light output may comprise 80 times the mandatory minimum light output, preferably 60 times the mandatory minimum light output, more preferably 40 times the mandatory minimum light output, even more preferably 20 times the mandatory minimum light output, and most preferably 10 times the mandatory minimum light output.

Alternatively, the mandatory minimum light output may comprise 1 lx; and the boost light output may comprise 40 times the mandatory minimum light output, preferably 30 times the mandatory minimum light output, more preferably 20 times the mandatory minimum light output, even more preferably 10 times the mandatory minimum light output, and most preferably 5 times the mandatory minimum light output.

Alternatively, the mandatory minimum light output may comprise 5 lx; and the boost light output may comprise 8 times the mandatory minimum light output, preferably 6 times the mandatory minimum light output, more preferably 4 times the mandatory minimum light output, and even more preferably 2 times the mandatory minimum light output.

Alternatively, the mandatory minimum light output may comprise 11 lx; and the boost light output may comprise 40/11 times the mandatory minimum light output, preferably 30/11 times the mandatory minimum light output, and more preferably 20/11 times the mandatory minimum light output.

The boost light output may comprise a flashing light output.

The emergency lighting system may further comprise a daylight sensor. The power converter may be configured to inhibit a feed of the emergency lighting means in accordance with the boost light output, in response to a reading of the daylight sensor.

The boost period may comprise to 12 seconds.

A capacity of the battery may exceed a mandatory minimum capacity by at least one order of magnitude.

The battery may comprise a solar battery.

The power converter may further be configured to adapt the boost period in dependence of a state of charge of the battery.

The power converter may further be configured to adapt the boost light output in dependence of the state of charge of the battery.

### Brief Description of the Drawings

Further aspects, advantages and objects of the invention will become evident for the skilled reader by means of the following detailed description of the embodiments of the invention, when taking into conjunction with the figures of the enclosed drawings.
Fig. 1 illustrates an emergency lighting system according to an embodiment of the present disclosure; and
Figs. 2 - 6 illustrate respective exemplary timelines of a light output of the emergency lighting system at a transition to emergency illumination.

### Detailed Descriptions of Embodiments

The invention will now be described with respect to various embodiments. The features of these embodiments may be combined with each other unless specified otherwise.

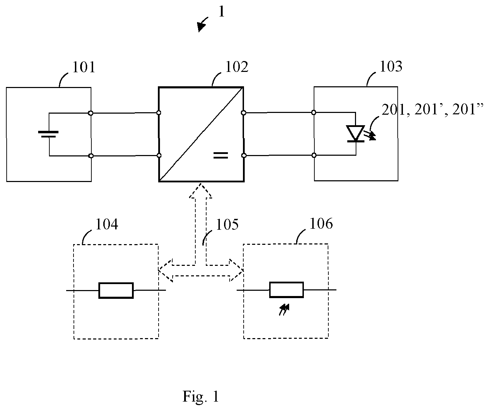

Fig. 1 illustrates an emergency lighting system 1 according to an embodiment of the present disclosure.

The emergency lighting system 1 comprises an emergency lighting means 103; a power converter 102; and a battery 101.

An emergency lighting means as used herein may generally relate to lighting means, such as LED lighting means, provided for use under emergency conditions. Examples of emergency lighting means comprise LED modules and LED-lit emergency signs.

A power converter as used herein may generally relate to an electrical device for converting electrical energy from one form to another, and in particular to an electrical device having a direct current (DC) output, as is also indicated in Fig. 1 by the "=" symbol, which stands for DC. The input may be DC or AC, corresponding to a DC/DC or AC/DC power converter 102, and to a matching DC or AC battery 101.

A battery as used herein may generally relate to a storage of electrical energy, and in particular to a capacitive or electrochemical storage of electrical energy, such as a super capacitor or a rechargeable DC or AC battery, as previously mentioned.

A capacity of the battery 101 may exceed a mandatory minimum capacity, e.g., as imposed by statutory requirements, by at least one order of magnitude. In particular, the battery 101 may comprise a solar battery 101.

In other words, emergency lighting and normal lighting may share a single high-capacity battery 101, and a percentage of the useable capacity of the battery 101 may be reserved for emergency lighting. This pays off in terms of cost savings (sharing of charging circuitry, electronics, ...)

Generally, the emergency lighting means 103 is configured to emit a light output 201 in accordance with a supply power fed by the power converter 102 off the battery 101.

In commencing a feed of the emergency lighting means 103, the power converter 102 is configured to feed the emergency lighting means 103 in accordance with a mandatory minimum light output 201'.

This minimum light output 201' may be given by legal provisions, and require the minimum light output 201' to be in the order of moonlight. This inhibits seamless human vision at a transition to emergency illumination, since the human eye needs to get used to the lower light output (e.g., 0.5, 1,5, or 11 lx under emergency conditions instead of, e.g., 500 lx under normal conditions).

However, the power converter 102 of Fig. 1 is further configured to feed the emergency lighting means 103 in accordance with a boost light output 201" which may exceed the mandatory minimum light output 201' for a limited boost period 202, in response to a reading of a sensor 104 connectable to the emergency lighting system 1.

In other words, responsive to a trigger from the sensor 104, the light output 201 of the emergency lighting means 103 may be increased for a short while from its minimum value 201' to a boost value 201". This adapts the light output 201 to the environmental conditions within the building, and facilitates seamless human vision at the transition to emergency illumination, since the human eye is given enough time to get used to the lower light output.

The emergency lighting system 1 may further comprise the sensor 104.

In particular, the sensor 104 may comprise a smoke sensor or a gas sensor.

A smoke sensor 104 may sense a fire situation within an environment of the sensor 104 and trigger feeding emergency lighting mean 103, such as escape route signs and/or emergency lighting units, in accordance with the boost light output 201", which improves a visibility of the emergency signs 103 in view of the ambient smoke.

A gas sensor 104 may sense hazardous gases within the environment of the sensor 104, and trigger feeding emergency lighting means 103, such as escape route signs and/or emergency lighting units, in accordance with the boost light output 201", which may comprise a flashing light output 201 and thus draw the attention of the humans present to this hazard.

Alternatively or additively, the sensor 104 may comprise a presence sensor.

A presence sensor such as a camera or a high-frequency presence detector may sense a presence of humans in an environment of the sensor 104 and trigger feeding emergency lighting means 103, such as escape route signs and/or emergency lighting units, in accordance with the boost light output 201", which improves a selectivity of boosting the light output, thus yields battery savings and extends a service life of the emergency lighting system 1. In addition, a presence or absence of humans may be indicated to approaching rescue staff. For example, mass gatherings and stampedes may be detected.

Alternatively or additively, the sensor 104 may comprise an acoustic sensor. Also other sensors capable of sensing a dangerous situation could be used.

An acoustic sensor such as a microphone may sense a sound in an environment of the sensor 104. A computer program executed in a control unit of the power converter 102 or in a cloud-based entity in communication with the power converter 102 may determine whether the sound relates to emergency conditions such as a terror strike, and trigger feeding emergency lighting means 103, such as escape route signs and/or emergency lighting units, in accordance with the boost light output 201". This extends an applicability of the emergency lighting system 1 in terms of emergency conditions.

The emergency lighting system 1 may further comprise communication means 105 configured to communicatively connect the sensor 104 and the power converter 102. In Fig. 1, the communication means 105 are indicated as a multi-arm block arrow.

The communication means 105 may comprise a Digital Addressable Lighting Interface DALI, a powerline interface, a wireless interface or another means of communication. This extends an applicability of the emergency lighting system 1 in terms of a spatial arrangement of the sensor 104 with respect to the emergency lighting system 1. For example, the sensor 104 may be arranged locally or remotely with respect to the power converter 102 of the emergency lighting system 1.

The emergency lighting system 1 may further comprise a daylight sensor 106, such as a light-dependent resistor (LDR), a photodiode or a phototransistor, respectively in connection with associated circuit elements. The communication means 105 may further be configured to communicatively connect the daylight sensor 106 and the power converter 102, as is suggested in Fig. 1. The power converter 102 may be configured to inhibit a feed of the emergency lighting means 103 in accordance with the boost light output 201", in response to a reading of the daylight sensor 106. In other words, the emergency lighting system 1 may not be required to boost its light output 201 if enough (i.e., a threshold-crossing quantity of) daylight is sensed. This inhibits a "boost mode" of the emergency lighting system 1, yields further battery savings and extends a service life of the emergency lighting system 1.

The boost period 202 may typically comprise 12 seconds. This time duration represents a practical tradeoff between getting used to the lower light output and saving on battery resources. But the period, if enough battery capacity is available, could be extended up to several hours, as long as a dangerous situation persists and elevated light levels are helpful for guiding people away from danger.

However, the power converter 102 may further be configured to adapt, viz. dynamically extend or shorten, the boost period 202 in dependence of a state of charge of the battery 101. Alternatively or additionally, the power converter 102 may be configured to adapt, viz. dynamically increase or decrease, the boost light output 201" in dependence of the state of charge of the battery 101. This may particularly be warranted if the state of charge of the battery 101 crosses a given threshold, such as 1/2, 2/3, 3/4, or 4/5 of a useable capacity of the battery 101, coming from below or above, respectively. For example, if the state of charge of the battery 101 is close to its useable capacity, then more than the percentage reserved for emergency lighting may be used for this purpose.

At an extreme, the emergency lighting means 103 may be fed in accordance with a boost light output 201" that corresponds to a normal illumination, such as 500 lx, for a longer boost period 202, such as half an hour, for example, or until the emergency conditions are no longer valid.

A computer program executed in the control unit of the power converter 102 or in a cloud-based entity in communication with the power converter 102 may determine the boost light output 201" and boost period 202 dynamically depending on the state of charge of the battery 101 and the quantity and nature of emergency situations within the building.

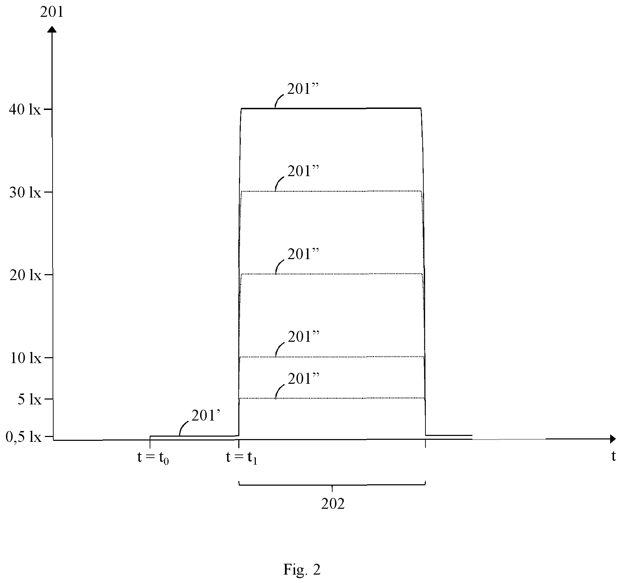

Fig. 2 illustrates a first exemplary timeline of a light output 201 of the emergency lighting system 1 at a transition to emergency illumination.

As can be seen, no light output 201 is recorded up to instant *t = tₒ* at which the transition to emergency illumination takes place.

Starting from instant *t = tₒ* and up to instant *t = t₁,* a mandatory minimum light output 201' is recorded. In this embodiment, the mandatory minimum light output 201' may comprise 0.5 lx.

At instant *t = t₁,* a reading of the sensor 104 becomes available. In response to the reading, the power converter 102 of Fig. 1 is configured to feed the emergency lighting means 103 in accordance with a boost light output 201" for a limited boost period 202.

In this embodiment, the boost light output 201" may comprise 80 times the mandatory minimum light output 201', preferably 60 times the mandatory minimum light output 201', more preferably 40 times the mandatory minimum light output 201', even more preferably 20 times the mandatory minimum light output 201', and most preferably 10 times the mandatory minimum light output 201'.

These factors correspond to an exemplary boost light output 201" of 40 lx, 30 lx, 20 lx, 10 lx, and 5 lx, respectively. The boost light output 201" thus exceeds the mandatory minimum light output 201' significantly, i.e., by approximately an order of magnitude, which implies a much higher level of safety, and facilitates seamless human vision at the transition to emergency illumination, since the human eye is given enough time at a moderate light output 201" to get used to the reduced illumination.

Upon expiry of the boost period 202, the light output 201 may return to its mandatory minimum value 201'.

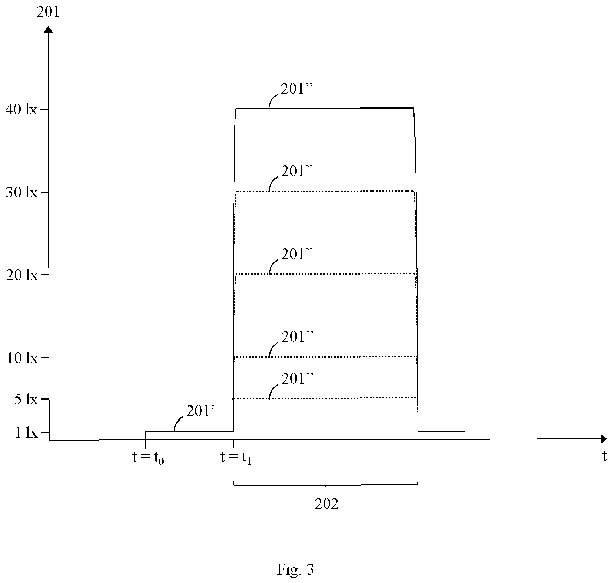

Fig. 3 illustrates a second exemplary timeline of a light output of the emergency lighting system 1 at a transition to emergency illumination.

The circumstances underlying the Figs. 2 and 3 are the same apart from the mandatory minimum light output 201', which may comprise 1 lx in the embodiment of Fig. 3.

In this embodiment, the boost light output 201" may comprise 40 times the mandatory minimum light output 201', preferably 30 times the mandatory minimum light output 201', more preferably 20 times the mandatory minimum light output 201', even more preferably 10 times the mandatory minimum light output 201', and most preferably 5 times the mandatory minimum light output 201'.

These factors correspond to an exemplary boost light output 201" of 40 lx, 30 lx, 20 lx, 10 lx, and 5 lx, respectively, and resulting in similar effects, advantages and conclusions as in connection with the timeline of Fig. 2.

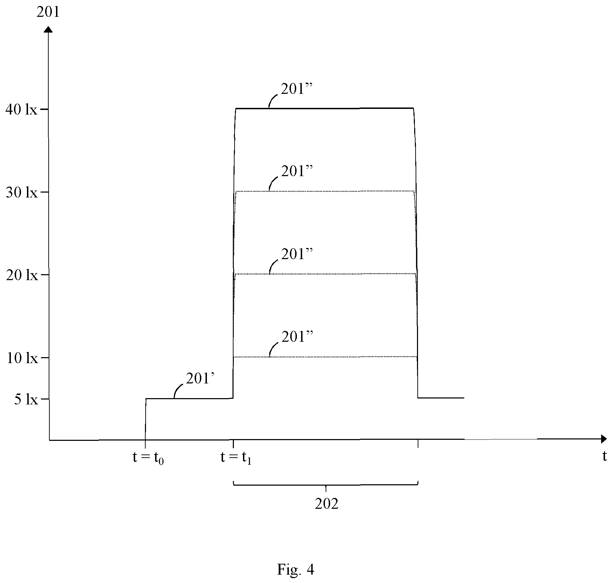

Fig. 4 illustrates a third exemplary timeline of a light output of the emergency lighting system 1 at a transition to emergency illumination.

The circumstances underlying the Figs. 3 and 4 are the same apart from the mandatory minimum light output 201', which may comprise 5 lx in the embodiment of Fig. 4.

In this embodiment, the boost light output 201" may comprise 8 times the mandatory minimum light output 201', preferably 6 times the mandatory minimum light output 201', more preferably 4 times the mandatory minimum light output 201', and even more preferably 2 times the mandatory minimum light output 201'.

These factors correspond to an exemplary boost light output 201" of 40 lx, 30 lx, 20 lx, and 10 lx, respectively, and resulting in similar effects, advantages and conclusions as in connection with the timelines of Figs. 2 or 3.

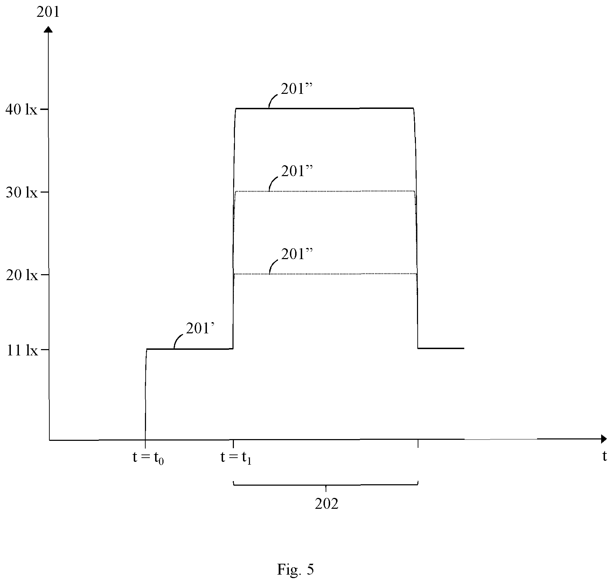

Fig. 5 illustrates a fourth exemplary timeline of a light output of the emergency lighting system 1 at a transition to emergency illumination.

The circumstances underlying the Figs. 4 and 5 are the same apart from the mandatory minimum light output 201', which may comprise 11 lx in the embodiment of Fig. 5.

In this embodiment, the boost light output 201" may comprise 40/11 times the mandatory minimum light output 201', preferably 30/11 times the mandatory minimum light output 201', and more preferably 20/11 times the mandatory minimum light output 201'.

These factors correspond to an exemplary boost light output 201" of 40 lx, 30 lx, or 20 lx, respectively, and resulting in similar effects, advantages and conclusions as in connection with the timelines of Figs. 2 to 4.

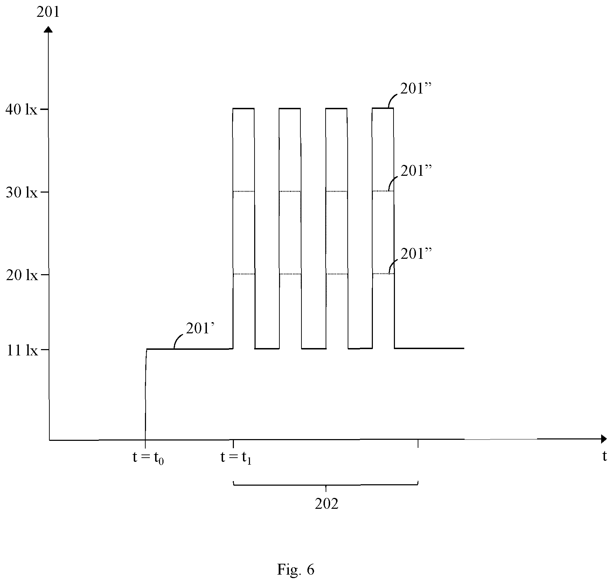

Fig. 6 illustrates a fifth exemplary timeline of a light output of the emergency lighting system 1 at a transition to emergency illumination.

The circumstances underlying the Figs. 5 and 6 are the same, with the exception that in this embodiment a boost light output 201" may comprise a flashing light output 201.

In response to the reading of the sensor 104 at instant *t = t₁,* the power converter 102 of Fig. 1 is configured to feed the emergency lighting means 103 in accordance with a boost light output 201" for a limited boost period 202.

Owing to the flashing light output 201, the light output 201 may alternate between the boost light output 201" and the minimum light output 201' according to a given periodicity (or rate within the boost period 202).

As previously mentioned, this embodiment may be particularly useful if the sensor 104 is for sensing a non-visual environmental condition, such as a gas concentrations, for example, so as to draw the attention of the humans present to this circumstance.

## Claims

1. An emergency lighting system (₁), comprising
an emergency lighting means (103);
a power converter (102); and
a battery (101);
the emergency lighting means (103) configured to
emit a light output (201) in accordance with a supply power fed by the power converter (102) off the battery (101);
the power converter (102) configured to
feed the emergency lighting means (103) in accordance with a mandatory minimum light output (201'), in commencing a feed of the emergency lighting means (103); and
feed the emergency lighting means (103) in accordance with a boost light output (201") exceeding the mandatory minimum light output (201') for a limited boost period (202) , in response to a reading of a sensor (104) connectable to the emergency lighting system (1).

2. The emergency lighting system (1) of claim 1, further comprising
the sensor (104).

3. The emergency lighting system (1) of claim 1 or claim 2,
the sensor (104) comprising a smoke sensor or a gas sensor.

4. The emergency lighting system (1) of claim 1 or claim 2,
the sensor (104) comprising a presence sensor.

5. The emergency lighting system (1) of claim 1 or claim 2,
the sensor (104) comprising an acoustic/sound sensor.

6. The emergency lighting system (1) of any of the preceding claims, further comprising
communication means (105) configured to communicatively connect the sensor (104) and the power converter (102).

7. The emergency lighting system (1) of claim 6,
the communication means (105) comprising a Digital Addressable Lighting Interface (DALI), a powerline interface, a wireless interface or another means of communication.

8. The emergency lighting system (1) of any of the claims 1 to 7,
the mandatory minimum light output (201') comprising 0.5 lx; and
the boost light output (201") comprising
80 times the mandatory minimum light output (201'), preferably
60 times the mandatory minimum light output (201'), more preferably
40 times the mandatory minimum light output (201'), even more preferably
20 times the mandatory minimum light output (201'), and most preferably
10 times the mandatory minimum light output (201').

9. The emergency lighting system (1) of any of the claims 1 to 7,
the mandatory minimum light output (201') comprising 1 lx; and
the boost light output (201") comprising
40 times the mandatory minimum light output (201'), preferably
30 times the mandatory minimum light output (201'), more preferably
20 times the mandatory minimum light output (201'), even more preferably
10 times the mandatory minimum light output (201'), and most preferably
5 times the mandatory minimum light output (201').

10. The emergency lighting system (1) of any of the claims 1 to 7,
the mandatory minimum light output (201') comprising 5 lx; and
the boost light output (201") comprising
8 times the mandatory minimum light output (201'), preferably
6 times the mandatory minimum light output (201'), more preferably
4 times the mandatory minimum light output (201'), and even more preferably
2 times the mandatory minimum light output (201').

11. The emergency lighting system (1) of any of the claims 1 to 7,
the mandatory minimum light output (201') comprising 11 lx; and
the boost light output (201") comprising
40/11 times the mandatory minimum light output (201'), preferably
30/11 times the mandatory minimum light output (201'), and more preferably
20/11 times the mandatory minimum light output (201').

12. The emergency lighting system (1) of any of the preceding claims,
the boost light output (201") comprising a flashing light output (201).

13. The emergency lighting system (1) of any of the preceding claims, further comprising
a daylight sensor (106);
the power converter (102) configured to inhibit a feed of the emergency lighting means (103) in accordance with the boost light output (201"), in response to a reading of the daylight sensor (106).

14. The emergency lighting system (1) of any of the preceding claims,
the boost period (202) comprising up to 12 seconds.

15. The emergency lighting system (1) of any of the preceding claims,
a capacity of the battery (101) exceeding a mandatory minimum capacity by at least one order of magnitude.

16. The emergency lighting system (1) of claim 15,
the battery (101) comprising a solar battery (101).

17. The emergency lighting system (1) of claim 15 or claim 16,
the power converter (102) further configured to adapt the boost period (202) in dependence of a state of charge of the battery (101).

18. The emergency lighting system (1) of any of the claims 15 to 17,
the power converter (102) further configured to adapt the boost light output (201") in dependence of the state of charge of the battery (101).
